# EUROPÄISCHE PATENTSCHRIFT

(11) **EP 3 330 221 B1**
(45) Veröffentlichungstag und Bekanntmachung des Hinweises auf die Patenterteilung: **11.09.2019**
(21) Anmeldenummer: 16400056.4
(22) Anmeldetag: 05.12.2016
(51) Int. Cl.: C01B 3/38, C10G 45/00

(54) **VERFAHREN UND VORRICHTUNG ZUM HERSTELLEN EINES FEEDSTROMS FÜR EINE DAMPFREFORMIERUNGSANLAGE**
METHOD AND DEVICE FOR CREATING A FEED FLOW FOR A STEAM REFORMING UNIT
PROCÉDÉ ET DISPOSITIF DE FABRICATION D'UN COURANT D'ALIMENTATION POUR UNE INSTALLATION DE VAPOREFORMAGE

(43) Veröffentlichungstag der Anmeldung: 06.06.2018
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Yue, Chen, 60326 Frankfurt am Main (DE); Swatantra, Kumar Shrivastava, 35423 Lich (DE); Mrityunjoy, Samaddar, 60438 Frankfurt am Main (DE)
(74) Vertreter: Dropsch, Holger

(56) Entgegenhaltungen:
- WO-A2-2011/016970
- US-A- 3 477 832
- US-A1- 2008 237 090
- US-B1- 7 037 485
- US-B2- 8 080 070

## Beschreibung

### Gebiet der Erfindung

Die vorliegende Erfindung betrifft ein Verfahren zum Herstellen eines Feedstroms für eine Dampfreformierungsanlage, wobei ein Kohlenwasserstoff-Einsatzstrom verwendet wird, der Olefine enthält. Ferner betrifft die Erfindung auch eine Vorrichtung zur Durchführung eines solchen Verfahrens.

### Stand der Technik

Kohlenwasserstoffe können mit Dampf katalytisch zu Synthesegas, also Mischungen von Wasserstoff (H₂) und Kohlenmonoxid (CO), umgesetzt werden. Wie in Ullmann's Encyclopedia of Industrial Chemistry, Sixth Edition, 1998 Electronic Release, Stichwort "Gas Production", ausgeführt wird, ist diese sogenannte Dampfreformierung (steam reforming) die meist angewandte Methode für die Produktion von Synthesegas, welches nachfolgend zu weiteren bedeutenden Grundchemikalien wie Methanol oder Ammoniak umgesetzt werden kann.

Die Dampfreformierung von Erdgas verläuft stark endotherm. Sie wird daher in einem Reformerofen durchgeführt, in dem zahlreiche, Katalysator enthaltende Reformerrohre parallel angeordnet sind, in denen die Dampfreformierungsreaktion abläuft. Die Reformerrohre werden zumeist mittels Brennern befeuert, die an der Oberseite oder Unterseite oder an den Seitenwänden im Innenraum des Reformerofens angebracht sind und direkt den Zwischenraum zwischen den Reformerrohren befeuern.

Nach Vorerhitzung durch Wärmetauscher oder befeuerte Heizer tritt das Kohlenwasserstoff-Dampf-Gemisch nach Enderhitzung in die Reformerrohre ein und wird dort am Reformierungskatalysator zu Kohlenmonoxid und Wasserstoff umgesetzt. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf.

Zur Energieoptimierung und/oder bei Einsatzstoffen mit höheren Kohlenwasserstoffen kann nach dem Vorerhitzer ein sogenannter Prereformer (Vorreformer) zur Vorspaltung des Einsatzstoffes eingesetzt werden. Der vorgespaltene Einsatzstoff wird dann in einem weiteren Erhitzer auf die gewünschte Eintrittstemperatur in den Hauptreformer, beispielsweise den Steamreformer, erhitzt. Die konventionelle Vorreformierung kann als Dampfreformierungsprozess bei begrenzten Temperaturen definiert werden (deutlich unter 700 °C). Sie führt zu einem gasförmigen Zwischenprodukt, dessen Hauptbestandteile Methan und Dampf sind. Das Zwischenprodukt enthält keine oder nur noch geringfügige Anteile höherer Kohlenwasserstoffe. Normalerweise wird dieses Zwischenprodukt in einem als Hauptreformer bezeichneten Steamreformer weiterbehandelt.

Wie in Ullmann's Encyclopedia of Industrial Chemistry, ibid., ausgeführt wird, werden für die Dampfreformierung normalerweise Katalysatoren auf mit Nickelbasis eingesetzt. Diese sind empfindlich gegenüber Katalysatorgiften wie Schwefel, Arsen, Kupfer, Vanadium, Blei und Chlor oder Halogene im Allgemeinen. Insbesondere Schwefel erniedrigt die Katalysatoraktivität deutlich und kann in praktisch allen Einsatzstoffen gefunden werden, die als Feed für die Dampfreformierung in Frage kommen. Daher müssen dem Feedstrom vor dem Einleiten in die Dampfreformierungsanlage diese Bestandteile durch geeignete Maßnahmen entzogen werden. Es werden heute Entschwefelungssysteme bevorzugt, bei denen die Entfernung von Schwefelverbindungen an Zinkoxid als Sorptionsmittel bei Temperaturen von 350 bis 400 ° C erfolgt. Diese Zinkoxid-basierten Entschwefelungssysteme sind sehr zuverlässig bei der Absorption von Schwefelwasserstoff und, mit Einschränkungen, Schwefelverbindungen wie Carbonylsulfid und Mercaptanen. Letztere werden oft mit Wasserstoff an geeigneten Katalysatoren zu Schwefelwasserstoff hydriert (Hydrodesulfurierung, HDS).

Für die Dampfreformierung ist zwar die Verwendung von methanhaltigem Erdgas als Einsatzstoff oder sog. Feed dominierend; es werden, je nach lokaler Verfügbarkeit, aber auch andere Kohlenwasserstoffe, wie beispielweise Naphtha, Flüssiggas oder Raffineriegase eingesetzt. So beschreibt die US-Patentschrift US 3477832 ein Verfahren zur Herstellung eines Synthesegases durch katalytische Dampfreformierung von Naphtha und ähnlichen Kohlenwasserstoffen. Als Naphtha im Sinne dieser Anmeldung werden dabei Kohlenwasserstoffe mit einer mittleren Kohlenstoffzahl von sieben verstanden, die gerade und verzweigte Kohlenwasserstoffe, einen gewissen Anteil aromatischer und olefinischer Kohlenwasserstoffe und verschiedene Verunreinigungen, beispielsweise Schwefelkomponenten, enthalten. Um dieses bei Umgebungsbedingungen flüssige Stoffgemisch in einen Feedstrom für die Dampfreformierung zu überführen, wird es verdampft und aufgeheizt, wobei die Temperatur idealerweise zwischen 260 und 316 °C liegen sollte, aber keinesfalls 343 °C überschreiten darf, da es ansonsten zu einem Zerfall von im Feed enthaltenen Komponenten unter Bildung unerwünschter Kohlenstoffablagerungen in der Dampfreformierungsanlage und in ihr vorgeschalteten Anlagenkomponenten kommt. Nachfolgend wird das aufgeheizte und verdampfte Stoffgemisch an einer Festbettschüttung einer Hydrierungskatalysators auf Co-Mo-Basis hydriert, wobei die Hydrierung ggf. mehrstufig verläuft. Anschließend wird das verdampfte und hydrierte Naphtha dem Dampfreformierungsreaktor zugeleitet.

Schwierigkeiten bereitet dabei die hohe Exothermie der Hydrierungsreaktion, die zur Bildung von Zonen hoher Temperatur im Katalysatorbett, sog. "hot spots", führen kann. Letztere können ihrerseits zu unerwünschten Crackreaktionen ungesättigter Komponenten im Einsatzstoff und/oder vorzeitiger Katalysatordesaktivierung führen. Um die Temperaturführung im Hydrierungsreaktor sicher zu beherrschen, wird oft ein Teil des Hydrierungsreaktorproduktes zum Reaktoreingang zurückgeführt, um die im Einsatzstoff vorhandenen ungesättigten Verbindungen zu verdünnen. Nachteilig ist es dabei, dass zur Erzielung des gewünschten Verdünnungseffektes oft große Mengen des gasförmigen bzw. dampfförmigen Hydrierungsreaktorproduktes verdichtet und zum Reaktoreingang des Hydrierungsreaktors zurückgeführt werden müssen, was durch entsprechend große und somit teure Verdichter erreicht wird.

US 8080070 offenbart ein Verfahren zur Hydrogenierung von Olefinen. Nach dieser Hydrogenierung wird der Feedstrom im Reformer geführt. Es wird offenbart, dass Einsatzströme mit hohen Olefin-Konzentrationen ein Rückführen eines (dampfförmigen) Teilstroms zum Hydrierungsreaktor erfordern.

### Beschreibung der Erfindung

Es ist daher die Aufgabe der vorliegenden Erfindung, ein Verfahren und eine Vorrichtung zum Herstellen eines Feedstroms für eine Dampfreformierungsanlage aus einem olefinhaltigen Einsatzstoff anzugeben, das ohne die beschriebenen Nachteile des Standes der Technik auskommt. Insbesondere soll das Verfahren bzw. die Vorrichtung eine sichere Verdampfung des flüssigen Kohlenwasserstoffeinsatzes und die nachfolgende Hydrierung der darin enthaltenen, ungesättigten Verbindungen gewährleisten, wobei eine Überhitzung, die zur Crackreaktionen der enthaltenen Olefine führt, zu vermeiden ist. Diese Aufgabe wird durch ein Verfahren mit den Merkmalen des Anspruchs 1 und durch eine Vorrichtung mit den Merkmalen des Anspruchs 9 gelöst. Weitere Ausgestaltungen der Erfindung ergeben sich aus den jeweiligen Unteransprüchen.

### Erfindungs-gemäßes Verfahren:

Verfahren zum Herstellen eines Feedstroms für eine mindestens eine Reformierungsstufe enthaltende Dampfreformierungsanlage, umfassend folgende Schritte:
(a) Bereitstellen eines ersten flüssigen Einsatzstroms, der Olefine enthält, und eines zweiten, Wasserstoff umfassenden Einsatzstroms,
(b) Zusammenführen des ersten und des zweiten Einsatzstroms zu einem Hydrierungseinsatzstrom,
(c) Aufheizen des Hydrierungseinsatzstroms in einer Aufheizvorrichtung und Verdampfen des Hydrierungseinsatzstroms in einer Verdampfungsvorrichtung,
(d) Zuführen des aufgeheizten und verdampften Hydrierungseinsatzstroms zu einem mindestens eine Hydrierungszone umfassenden Hydrierungsreaktor, mindestens teilweises Umsetzen der im Hydrierungseinsatzstrom enthaltenen Olefine in dem Hydrierungsreaktor unter Olefin-Hydrierungsbedingungen, Ausleiten eines dampfförmigen Olefin-Hydrierungsproduktstroms aus dem Hydrierungsreaktor,
(e) Auftrennen des Olefin-Hydrierungsproduktstroms in einer Auftrennvorrichtung in einen dampfförmigen Reformierungsfeedstrom, der einer Dampfreformierungsanlage zugeführt wird, und in einen dampfförmigen Rückführstrom,
(f) Abkühlen des dampfförmigen Rückführstroms, wobei dieser mindestens teilweise kondensiert und nachfolgend einer Phasentrennvorrichtung zugeführt wird, in der er in einen dampfförmigen Teilrückführstrom und einen flüssigen Teilrückführstrom aufgetrennt wird,
(g) Ausleiten des dampfförmigen Teilrückführstroms und des flüssigen Teilrückführstroms aus der Phasentrennvorrichtung, wobei der dampfförmige Teilrückführstrom mit dem zweiten Einsatzstrom zusammengeführt wird und der flüssige Teilrückführstrom mit dem ersten Einsatzstrom zusammengeführt wird und/oder zum Verfahrensschritt (b) zurückgeführt wird.

### Erfindungsgemäße Vorrichtung:

Vorrichtung zum Herstellen eines Feedstroms für eine mindestens eine Reformierungsstufe enthaltende Dampfreformierungsanlage, umfassend folgende, in Fluidverbindung miteinander stehende Bestandteile:
(a) Mittel zum Bereitstellen eines ersten flüssigen Einsatzstroms, der Olefine enthält, und eines zweiten, Wasserstoff umfassenden Einsatzstroms,
(b) Mittel zum Zusammenführen des ersten und des zweiten Einsatzstroms zu einem Hydrierungseinsatzstrom,
(c) eine Aufheizvorrichtung zum Aufheizen des Hydrierungseinsatzstroms eine Verdampfungsvorrichtung zum Verdampfen des Hydrierungseinsatzstroms,
(d) einen mindestens eine Hydrierungszone umfassenden Hydrierungsreaktor, Mittel zum Zuführen des aufgeheizten und verdampften Hydrierungseinsatzstroms zum Hydrierungsreaktor, Mittel zum Ausleiten eines dampfförmigen Olefin-Hydrierungsproduktstroms aus dem Hydrierungsreaktor,
(e) eine Auftrennvorrichtung zum Auftrennen des Olefin-Hydrierungsproduktstroms in einen dampfförmigen Reformierungsfeedstrom und einen dampfförmigen Rückführstrom, Mittel zum Zuführen des dampfförmigen Reformierungsfeedstroms zu einer Dampfreformierungsanlage,
(f) Mittel zum Abkühlen und zur mindestens teilweise Kondensieren des dampfförmigen Rückführstroms, Mittel zum Zuführen des mindestens teilweise kondensierten, dampfförmigen Rückführstroms zu einer Phasentrennvorrichtung, eine Phasentrennvorrichtung, geeignet zum Auftrennen des mindestens teilweise kondensierten, dampfförmigen Rückführstroms in einen dampfförmigen Teilrückführstrom und einen flüssigen Teilrückführstrom,
(g) Mittel zum Ausleiten des dampfförmigen Teilrückführstroms und des flüssigen Teilrückführstroms aus der Phasentrennvorrichtung, Mittel zum Zusammenführen des dampfförmigen Teilrückführstroms mit dem zweiten Einsatzstrom, Mittel zum Zusammenführen des flüssigen Teilrückführstroms mit dem ersten Einsatzstrom und/oder Mittel zum Zurückführen des flüssigen Teilrückführstroms zum Vorrichtungsbestandteil (b).

Unter Fluidverbindung zwischen zwei Bereichen der erfindungsgemäßen Vorrichtung wird dabei jegliche Art von Verbindung verstanden, die es ermöglicht, dass ein Fluid, beispielsweise ein Gasstrom, von dem einen zu dem anderen der beiden Bereiche strömen kann, unbeachtlich etwaiger zwischengeschalteter Bereiche oder Bauteile.

Als höhere Kohlenwasserstoffe werden im Sinne der Erfindung alle Kohlenwasserstoffe mit mehr als einem C-Atom im Molekül verstanden.

Die für das Umsetzen der Olefine im Hydrierungsreaktor erforderlichen Umsetzungsbedingungen, die Olefin-Hydrierungsbedingungen, sind dem Fachmann aus dem Stand der Technik, beispielsweise den eingangs erörterten Druckschriften, bekannt. Notwendige Anpassungen dieser Bedingungen an die jeweiligen Betriebserfordernisse wird er auf der Grundlage von Routineversuchen vornehmen.

Der Erfindung liegt die Erkenntnis zugrunde, dass es vorteilhaft ist, einen Teil des Hydrierungsreaktorproduktes nicht gasförmig bzw. dampfförmig zum Eingang des Hydrierungsreaktors zurückzuführen, um die erwünschte Verdünnungswirkung zu erzielen. Vielmehr wird vorgeschlagen, den von dem dampfförmigen Reformierungsfeedstrom in der Auftrennvorrichtung abgetrennten Anteil des Olefin-Hydrierungsproduktstroms abzukühlen und mindestens teilweise zu kondensieren. Der dabei erhaltene flüssige Teilrückführstrom kann mittels einfacher Flüssigkeitspumpen gefördert und beispielsweise mit dem ersten, flüssigen Einsatzstrom zusammengeführt werden. Der dabei erhaltene, dampfförmige Teilrückführstrom kann aufgrund seiner geringen Größe entweder mit einem separaten Verdichter kleiner Baugröße gefördert und verdichtet werden, gegebenenfalls kann aber auch der für die Verdichtung des zweiten, wasserstoffhaitigen Einsatzstroms ohnehin benötigte Verdichter für das Fördern und Verdichten des dampfförmigen Teilrückführstroms mit genutzt werden. Auf diese Weise wird ein großer und kostspieliger Verdichter für den rückgeführten Anteil des Hydrienjngsreaktorproduktes eingespart.

Vorteilhaft ist es ferner, dass die bei der mindestens teilweisen Kondensation des abgetrennten Anteils des Olefin-Hydrierungsproduktstroms freiwerdende Kondensationswärme durch indirekten Wärmetausch beispielsweise auf den ersten, flüssigen Einsatzstrom übertragen werden kann und so zu dessen Erwärmung vor der Verdampfung beiträgt. Hierdurch erhöht sich die Energieeffizienz des Verfahrens.

### Bevorzugte Ausgestaltungen der Erfindung

In einer bevorzugten Ausgestaltung des erfindungsgemäßen Verfahrens wird der dampfförmige Teilrückführstrom mit dem zweiten Einsatzstrom zusammengeführt und mit diesem gemeinsam verdichtet oder der dampfförmige Teilrückführstrom mit dem bereits verdichteten, zweiten Einsatzstrom zusammengeführt. Hierdurch kann eine Rückführung des dampfförmigen Teilrückführstroms erreicht werden, ohne dass es hierfür eines separaten Verdichters bedarf. Oftmals kann der bereits vorhandene Wasserstoffverdichter zu diesem Zweck mitbenutzt werden.

Eine weitere bevorzugte Ausgestaltung des erfindungsgemäßen Verfahrens ist dadurch gekennzeichnet, dass die Aufheizvorrichtung in Verfahrensschritt (c) als Wärmetauscher ausgestaltet ist, in dem der Hydrierungseinsatzstrom durch indirekten Wärmetausch mit einem heißen Rohsynthesegas-Produktstrom aus der Dampfreformierungsanlage, mit einem heißen Rauchgasstrom aus dem Reformerofen, mit einem heißen Produktgasstrom aus der der Dampfreformierungsanlage nachgeschalteten CO-Konvertierungsanlage (CO-Shift) oder mit mehreren dieser Heißgasströme aufgeheizt wird. Durch diese Maßnahme wird der Wärmeinhalt der genannten Prozessströme zum Aufheizen des ersten Einsatzstroms genutzt und somit die Energieeffizienz des Gesamtverfahrens verbessert.

In einem weiteren Aspekt des erfindungsgemäßen Verfahrens erfolgt im Hydrierungsreaktor auch ein mindestens teilweises Umsetzen von im ersten Einsatzstrom enthaltenen, organischen Schwefelverbindungen unter Bedingungen der Hydrodesulfurierung (HDS) zu entschwefelten Kohlenwasserstoffen und Schwefelwasserstoff, wobei der gebildete Schwefelwasserstoff aus dem Reformierungsfeedstrom abgetrennt wird, bevor er der Dampfreformierungsanlage zugeführt wird. Die Bedingungen der Hydrierung ungesättigter Verbindungen und der Hydrodesulfurierung sind einander so ähnlich, dass die beiden Prozessschritte in demselben Reaktor durchgeführt werden können, falls eine Entschwefelung des organischen Einsatzstoffes erforderlich ist.

In weiterer Ausgestaltung des erfindungsgemäßen Verfahrens erfolgt das Abkühlen in Verfahrensschritt (f) mehrstufig, wobei mindestens eine Kühlstufe als Wärmetauscher ausgestaltet ist, in dem das Abkühlen des dampfförmigen Rückführstroms im indirekten Wärmetausch gegen den dem Verfahren zugeführten ersten Einsatzstrom oder den Hydrierungseinsatzstrom erfolgt. Neben der Abkühlung des dampfförmigen Rückführstroms kann somit eine Vorwärmung des ersten Einsatzstroms oder des Hydrierungseinsatzstroms erreicht werden. Hierdurch verbessert sich der Wärmehaushalt des Verfahrens.

Besonders bevorzugt wird es bei der zuvor erörterten Ausgestaltung des erfindungsgemäßen Verfahrens, wenn mindestens eine weitere Kühlstufe vorhanden ist, in der das Abkühlen des dampfförmigen Rückführstroms im indirekten Wärmetausch gegen ein Kühlmedium, insbesondere Kühlwasser, erfolgt. Auf diese Weise wird eine größere Flexibilität hinsichtlich der zu erzielenden Kühlwirkung erreicht.

Besonders vorteilhaft ist es, wenn in Verfahrensschritt (f) der dampfförmige Rückführstrom so stark abgekühlt wird, dass er zu mindestens zur Hälfte kondensiert wird, so dass mindestens 50 mol-% des Rückführstroms, bevorzugt mindestens 70 mol-% des Rückführstroms flüssig vorliegen. Auf diese Weise wird ein dampfförmiger Teilrückführstrom erhalten, der so klein ist, dass er dem Verdichter für den zweiten Einsatzstrom aufgegeben werden kann, ohne dass dieser vergrößert werden muss.

In besonderer Ausgestaltung des erfindungsgemäßen Verfahrens umfasst die Dampfreformierungsanlage eine Vorreformierungsstufe (Prereformer), in der höhere Kohlenwasserstoffe unter Vorreformierungsbedingungen mindestens teilweise zu Methan umgesetzt werden. Diese Ausgestaltung ist vorteilhaft, da die im Feedstrom enthaltenen Olefine zu den entsprechenden Alkanen hydriert werden, die dann in der Vorreformierungsstufe gezielt zu Methan vorumgesetzt werden können, bevor der gemischte Feedstrom in die Hauptreformierungsstufe gelangt,

In besonderer Ausgestaltung der erfindungsgemäßen Vorrichtung umfasst diese ferner einen Verdichter, geeignet zum Verdichten des zweiten Einsatzstroms oder des mit dem dampfförmigen Teilrückführstrom zusammengeführten zweiten Einsatzstroms. Oftmals kann der bereits vorhandene Wasserstoffverdichter zu diesem Zweck mitbenutzt werden.

Eine weitere bevorzugte Ausgestaltung der erfindungsgemäßen Vorrichtung ist dadurch gekennzeichnet, dass die Aufheizvorrichtung in Vorrichtungsbestandteil (c) als Wärmetauscher ausgestaltet ist, geeignet zum Aufheizen des Hydrierungseinsatzstroms durch indirekten Wärmetausch mit einem heißen Rohsynthesegas-Produktstrom aus der Dampfreformierungsanlage, mit einem heißen Rauchgasstrom aus dem Reformerofen, mit einem heißen Produktgasstrom aus der der Dampfreformierungsanlage nachgeschalteten CO-Konvertierungsanlage (CO-Shift) oder mit mehreren dieser Heißgasströme. Durch diese Maßnahme wird der Wärmeinhalt der genannten Prozessströme zum Aufheizen des ersten Einsatzstroms genutzt und somit die Energieeffizienz des Gesamtverfahrens verbessert.

In einem weiteren Aspekt ist in der erfindungsgemäßen Vorrichtung der Hydrierungsreaktor auch geeignet zum mindestens teilweisen Umsetzen von im ersten Einsatzstrom enthaltenen, organischen Schwefelverbindungen unter Bedingungen der Hydrodesulfurierung (HDS) zu entschwefelten Kohlenwasserstoffen und Schwefelwasserstoff, wobei ferner Mittel umfasst werden, um den gebildeten Schwefelwasserstoff aus dem Reformierungsfeedstrom abzutrennen, bevor er der Dampfreformierungsanlage zugeführt wird. Die Bedingungen der Hydrierung ungesättigter Verbindungen und der Hydrodesulfurierung sind einander so ähnlich, dass die beiden Prozessschritte in demselben Reaktor durchgeführt werden können, falls eine Entschwefelung des organischen Einsatzstoffes erforderlich ist.

In weiterer Ausgestaltung der erfindungsgemäßen Vorrichtung ist die Abkühlvorrichtung in Vorrichtungsbestandteil (f) mehrstufig ausgestaltet, wobei mindestens eine Kühlstufe als Wärmetauscher ausgestaltet ist, die geeignet ist zum Abkühlen des dampfförmigen Rückführstroms im indirekten Wärmetausch gegen den dem Verfahren zugeführten ersten Einsatzstrom oder den Hydrierungseinsatzstrom. Neben der Abkühlung des dampfförmigen Rückführstroms kann somit eine Vorwärmung des ersten Einsatzstroms oder des Hydrierungseinsatzstroms erreicht werden. Hierdurch verbessert sich der Wärmehaushalt des Verfahrens.

Besonders bevorzugt wird es bei der zuvor erörterten Ausgestaltung der erfindungsgemäßen Vorrichtung, wenn eine weitere Kühlstufe vorhanden ist, die geeignet ist zum Abkühlen des dampfförmigen Rückführstroms im indirekten Wärmetausch gegen ein Kühlmedium, insbesondere Kühlwasser. Auf diese Weise wird eine größere Flexibilität hinsichtlich der zu erzielenden Kühlwirkung erreicht.

In besonderer Ausgestaltung der erfindungsgemäßen Vorrichtung umfasst die Dampfreformierungsanlage ferner eine Vorreformierungsstufe (Prereformer), die geeignet ist zum mindestens teilweise Umsetzen der höhere Kohlenwasserstoffe unter Vorreformierungsbedingungen zu Methan. Diese Ausgestaltung ist vorteilhaft, da die im Feedstrom enthaltenen Olefine zu den entsprechenden Alkanen hydriert werden, die dann in der Vorreformierungsstufe gezielt zu Methan vorumgesetzt werden können, bevor der gemischte Feedstrom in die Hauptreformierungsstufe gelangt.

### Ausführungs- und Zahlenbeispiele

Weitere Merkmale, Vorteile und Anwendungsmöglichkeiten der Erfindung ergeben sich auch aus der nachfolgenden Beschreibung von Ausführungs- und Zahlenbeispielen und der Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: ein Verfahren zum Herstellen eines Feedstroms für eine Dampfreformierungsanlage gemäß des Stands der Technik,
- Fig. 2: die schematische Darstellung des erfindungsgemäßen Verfahrens nach einer bevorzugten Ausgestaltung.

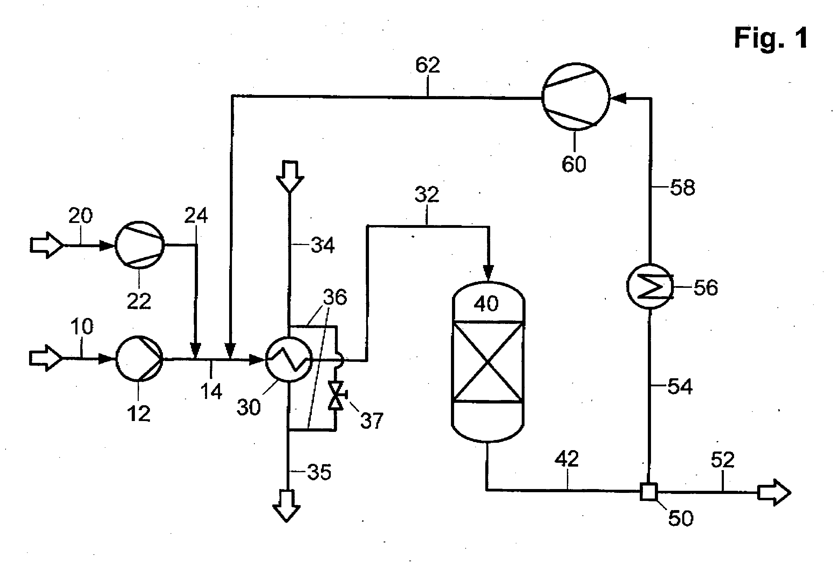

In Fig. 1 wird ein Verfahren gemäß des Stands der Technik zum Herstellen eines Feedstroms für eine Dampfreformierungsanlage aus einem olefinhaitigen Kohlenwasserstoff-Einsatzstrom schematisch als Blockfließbild dargestellt.

Über Leitung 10 und Pumpe 12 wird der erste Einsatzstrom, ein olefinhaltiges, flüssiges Kohlenwasserstoffgemisch, bereitgestellt und über Leitung 14 zum Wärmetauscher 30 geleitet. Über Leitung 20 und Verdichter 22 wird ein zweiter Einsatzstrom, ein wasserstoffhaltiger Gasstrom, bereitgestellt und über Leitungen 24 und 14 ebenfalls zum Wärmetauscher 30 geführt. Durch das Zusammenführen des ersten und des zweiten Einsatzstroms ergibt sich somit ein Hydrierungseinsatzstrom, der im Wärmetauscher 30 aufgeheizt und verdampft wird und über Leitung 32 dem Hydrierungsreaktor 40 zugeführt wird. Alternativ kann der zweite, wasserstoffhaltige Einsatzstrom auch nach der Verdampfung des ersten Einsatzstroms zugegeben werden, um den Hydrierungseinsatzstrom zu bilden; es ist dann ggf. eine zusätzlich Heizvorrichtung zum Einstellen der gewünschten Eintrittstemperatur in den Hydrierungsreaktor vorzusehen.

Gemäß der Darstellung in Fig. 1 wird der resultierende Hydrierungseinsatzstrom im Wärmetauscher 30 im indirekten Wärmetausch gegen den heißen Produktgasstrom aus der der Dampfreformierungsanlage nachgeschalteten CO-Konvertierungsanlage (CO-Shift) aufgeheizt, der über Leitung 34 zum Wärmetauscher 30 geführt wird.

Um den Temperaturanstieg beim Aufheizen des Hydrierungseinsatzstroms im Wärmetauscher 30 zu begrenzen, ist dieser mit einem Bypass, Leitung 36 und ein im Leitungsweg 36 angeordnetes Regelventil 37, ausgestattet. Der abgekühlte Produktgasstrom aus der CO-Konvertierungsanlage wird über Leitung 35 aus dem Verfahren ausgeleitet.

Im Hydrierungsreaktor 40 werden die im Hydrierungseinsatzstrom enthaltenen Olefine sowie ggf. noch enthaltene Anteile an Diolefinen zu einem Paraffine enthaltenden Olefin-Hydrierungsproduktstrom hydriert. Ferner können auch organische Schwefelkomponenten zu den entsprechenden Kohlenwasserstoffen und Schwefelwasserstoff hydriert werden. Im letzteren Fall muss der erzeugte Schwefelwasserstoff durch geeignete Maßnahmen, beispielsweise durch den Einsatz von Adsorptionsmittel auf Basis von Zinkoxid, entfernt werden, bevor der Olefin-Hydrierungsproduktstrom der Dampfreformierungsanlage zugeführt wird. Die für die kombinierte Hydrierung der Mono- und Diolefine sowie die organischen Schwefelkomponenten benötigten Katalysatoren, beispielsweise auf Co-Mo- oder Ni-Mo-Basis, hält der Handel bereit. Alternativ kann die Hydrierung der Diolefine sowie der organischen Schwefelkomponenten in separaten Hydrierungsreaktoren durchgeführt werden, um die Hydrierungsbedingungen jeweils optimal für den jeweiligen Einsatzstoff zu gestalten. Besonders häufig wird es bevorzugt, die Diolefine in einem separaten Hydrierungsreaktor bei tieferen Hydrierungstemperaturen zu hydrieren, um eine Polymerisation und Ablagerung des gebildeten Polymerisats im Olefin-Hydrierungsreaktor zu verhindern. Die zu wählenden Hydrierungsbedingungen für alle diese Hydrierungsvarianten sind dem Fachmann bekannt. Die beschriebenen Modifikationen mit separatem Hydrierungsreaktor für die Diolefine bzw. organischen Schwefelkomponenten wurden bildlich nicht dargestellt; sie sind dem Fachmann aber an sich bekannt.

Über Leitung 42 wird der erhaltene Olefin-Hydrierungsproduktstrom aus dem Hydrierungsreaktor 40 ausgeleitet und der Auftrennvorrichtung 50 zugeführt. Diese kann in einfacher Weise durch Regelventile realisiert werden, die im Leitungsweg der Leitungen 52 und 54 angeordnet werden. Aus der Auftrennvorrichtung wird über Leitung 52 ein dampfförmiger Reformierungsfeedstrom ausgeleitet und der Dampfreformierungsanlage zugeführt. Ferner wird über Leitung 54 ein dampfförmiger Rückführstrom aus der Auftrennvorrichtung ausgeleitet und einer Kühlvorrichtung 56 zugeführt. Die Kühlvorrichtung 56 kann beispielsweise als Wärmetauscher ausgestaltet werden, im dem die Kühlung des dampfförmigen Rückführstroms gegen ein geeignetes Kühlmedium, beispielsweise Kühlwasser, erfolgt. Aufgabe der Kühlvorrichtung ist es, die durch die exotherm verlaufende Hydrierung freigesetzte Wärmemenge aus dem dampfförmigen Rückführstrom abzuführen und diesen soweit abzukühlen, dass er wiederum dem Hydrierungseinsatzstrom zugeführt werden kann und somit eine Überhitzung des Hydrierungsreaktors 40 vermieden wird. Der Rückführstrom verbleibt dabei aber im dampfförmigen Zustand.

Über Leitung 58 wird der nunmehr abgekühlte, dampfförmige Rückführstrom dem Kreislaufverdichter 60 zugeführt und in diesem verdichtet. Über Leitung 62 und Leitung 14 gelangt der verdichtete, dampfförmige Rückführstrom wiederum zum Wärmetauscher 30 zurück, nachdem er mit dem ersten und dem zweiten Einsatzstrom zusammengeführt und somit Bestandteil des Hydrierungseinsatzstroms wird.

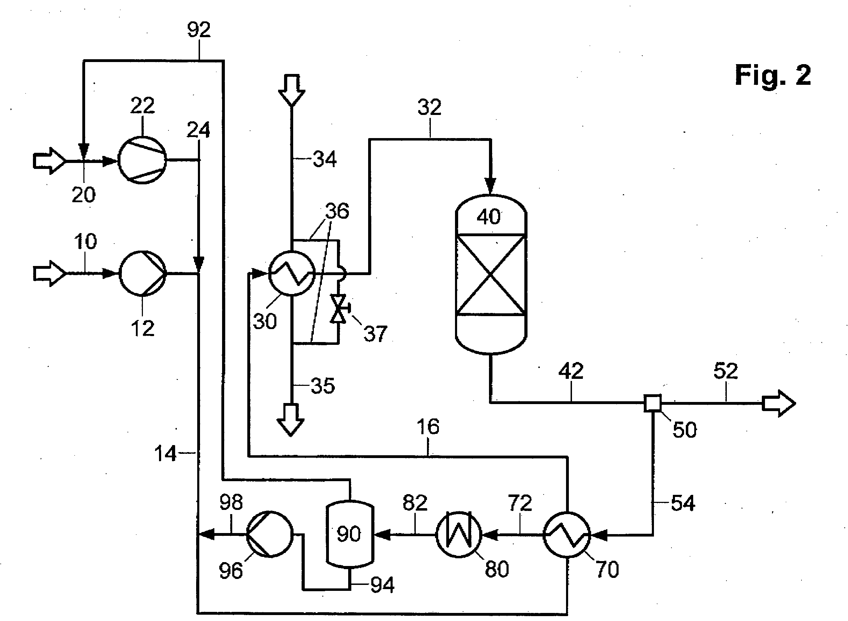

In der in Fig. 2 gezeigten, schematischen Darstellung des erfindungsgemäßen Verfahrens bzw. der erfindungsgemäßen Vorrichtung nach einer bevorzugten Ausgestaltung entspricht der Gang des Verfahrens bis zum Bezugszeichen 54 dem im Zusammenhang mit der Fig. 1 erörterten Verfahrensablauf, wobei Bezugszeichen gleicher Nummerierung auch dieselbe Bedeutung haben wie in Fig. 1.

In Ergänzung zum in Fig. 1 erörterten Verfahrensablauf wird der durch Zusammenführen des ersten und des zweiten Einsatzstroms gebildete Hydrierungseinsatzstrom über Leitung 14 zum Wärmetauscher 70 geführt und dort im indirekten Wärmetausch mit dem dampfförmigen Rückführstrom vorerhitzt, der über Leitung 54 aus der Auftrennvorrichtung 50 ausgeleitet und zum Wärmetauscher 70 geführt wird. Über Leitung 16 wird sodann der vorerhitzte Hydrierungseinsatzstrom zum Wärmetauscher 30 geleitet und dort aufgeheizt und verdampft.

Der aus dem Wärmetauscher 70 ausgeleitete, abgekühlte, dampfförmige Rückführstrom wird über Leitung 72 zu der Kühlvorrichtung 80 geleitet. Die Kühlvorrichtung 80 kann beispielsweise als Wärmetauscher ausgestaltet werden, im dem die Kühlung des dampfförmigen Rückführstroms gegen ein geeignetes Kühlmedium, beispielsweise Kühlwasser, erfolgt. Aufgabe des Wärmetauschers 70 und der Kühlvorrichtung 80 ist es, die durch die exotherm verlaufende Hydrierung freigesetzte Wärmemenge aus dem dampfförmigen Rückführstrom abzuführen und diesen soweit abzukühlen, dass zumindest teilweise Kondensation erfolgt. Der teilkondensierte Stoffstrom wird über Leitung 82 aus der Kühlvorrichtung 80 ausgeleitet, der Phasentrennvorrichtung 90 aufgegeben und in letzterer in einen dampfförmigen Teilrückführstrom und einen flüssigen Teilrückführstrom aufgetrennt. Der dampfförmige Teilrückführstrom, der auch einen Teil des in der Hydrierung nicht umgesetzten Wasserstoffs enthält, wird über Leitung 92 aus der Phasentrennvorrichtung ausgeleitet und mit dem in Leitung 20 herangeführten, zweiten Einsatzstrom vereinigt.

Der über Leitung 94 aus der Phasentrennvorrichtung ausgeleitete, flüssige Teilrückführstrom wird über Pumpe 96 und Leitung 98 mit dem Hydrierungseinsatzstrom vereinigt, der über Leitung 14 herangeführt wird. Alternativ kann der flüssige Teilrückführstrom auch mit dem in Leitung 10 herangeführten, ersten Einsatzstrom vereinigt werden, wodurch die Pumpe 96 eingespart wird.

Vorteilhaft bei dem in Fig. 2 beschriebenen Ausgestaltung der Erfindung ist es, dass gegenüber dem aus dem Stand der Technik bekannten und in Fig. 1 erörterten Verfahrensablauf der Kreislaufverdichter 60 eingespart wird. Dier Einsparungseffekt ist signifikant, weil es sich aufgrund der großen zurückzuführenden Gas- bzw. Dampfmengen und aufgrund des Temperaturniveaus der zu verdichtenden Gase oder Dämpfe um einen Apparat in aufwendiger, ggf. mehrstufiger Ausgestaltung und großer Baugröße handelt.

### Zahlenbeispiele

In den nachfolgenden Zahlenbeispielen wird die Wirkungsweise der Erfindung anhand der Ergebnisse von Simulationsrechnungen verdeutlicht. Betrachtet wird dabei der Fall der Erzeugung eines Feeds für eine Dampfreformierungsanlage mit einer Wasserstoffkapazität von einer 130000 m_{N}³/h, wobei als Kohlenwasserstoffeinsatz ein Flüssiggasgemisch (LPG) mit einem Olefingehalt von 50 mol-% dient.

Vergleichsbeispiel. Beim Herstellen eines Feedstroms für eine Dampfreformierungsanlage gemäß Stand der Technik (Fig. 1) benötigt der verwendete Kreislaufverdichter 60 eine elektrische Leistung von 165 kW. Die externe Kühlleistung, die in der Kühlvorrichtung 56 aufgebracht werden muss, um die Eintrittstemperatur des dampfförmigen Rückführstroms auf ein geeignetes Temperaturniveau zu bringen, beträgt 4,2 GJ/h. Der Kühlwasserverbrauch für das Kühlen des Kreislaufverdichters 60 beträgt 60 m³/h.

Erfindung. Beim Herstellen eines Feedstroms für eine Dampfreformierungsanlage gemäß Erfindung (Fig. 2) entfällt der Kreislaufverdichter 60, wodurch Investitionskosten eingespart werden. Im Gegenzug wird eine Pumpe 96 benötigt, die aufgrund ihrer kleinen Baugröße und einfacheren Konstruktion aber wesentlich kostengünstiger ist und ggf. sogar entfallen kann, vgl. die Ausführungen zu Fig. 2. Für den dampfförmigen Teilrückführstrom wird der bestehende Verdichter 22 mit benutzt, so dass hier keine separaten Investitionskosten anfallen. Die bei dieser Verfahrensführung benötigte elektrische Leistung beträgt 20 kW, so dass im Vergleich zum Vergleichsbeispiel 145 kW an elektrischer Leistung eingespart wird. Im Gegenzug beträgt die externe Kühlleistung, die in der Kühlvorrichtung 80 aufgebracht werden muss, um die Temperatur des dampfförmigen Rückführstroms auf ein geeignetes Temperaturniveau für die Teilkondensation zu bringen, rund 9,50 GJ/h, so dass gemäß der Erfindung rund 5,32 GJ/h mehr an externer Kühlleistung benötigt werden als bei Verfahrensführung nach dem Stand der Technik. Gerade in Anlagenverbünden stehen aber oft Kühlmedien wie z. B. Kühlwasser kostengünstig zur Verfügung, so dass die Einsparung hinsichtlich der benötigten elektrischen Leistung in Verbindung mit dem Entfall des Kreislaufverdichters dominiert.

### Gewerbliche Anwendbarkeit

Mit der Erfindung werden ein Verfahren und eine Vorrichtung zum Herstellen eines olefinhaltigen Feedstroms für eine Dampfreformierungsanlage bereitgestellt. Durch die erfindungsgemäße Abkühlung des dampfförmigen Rückführstroms bis zu seiner wenigstens teilweisen Kondensation und die getrennte Rückführung des dampfförmigen Teilrückführstroms und des flüssigen Teilrückführstroms wird die Anschaffung eines großen und aufwendig gestalteten Kreislaufverdichters vermieden und es wird elektrische Energie zum Betreiben desselben eingespart.

### Bezugszeichenliste

- 10: Leitung
- 12: Pumpe
- 14: Leitung
- 20: Leitung
- 22: Verdichter
- 24: Leitung
- 30: Wärmetauscher
- 32: Leitung
- 34: Leitung
- 35: Leitung
- 36: Leitung
- 37: Regelventil
- 40: Hydrierreaktor
- 42: Leitung
- 50: Auftrennvorrichtung
- 52: Leitung
- 54: Leitung
- 56: Kühlvorrichtung
- 58: Leitung
- 60: Kreislaufverdichter
- 62: Leitung
- 70: Wärmetauscher
- 72: Wärmetauscher
- 80: Kühlvorrichtung
- 82: Leitung
- 90: Phasentrennvorrichtung
- 92: Leitung
- 94: Leitung
- 96: Pumpe
- 98: Leitung

## Patentansprüche

1. Verfahren zum Herstellen eines Feedstroms für eine mindestens eine Reformierungsstufe enthaltende Dampfreformierungsanlage, umfassend folgende Schritte:
(a) Bereitstellen eines ersten flüssigen Einsatzstroms, der Olefine enthält, und eines zweiten, Wasserstoff umfassenden Einsatzstroms,
(b) Zusammenführen des ersten und des zweiten Einsatzstroms zu einem Hydrierungseinsatzstrom,
(c) Aufheizen des Hydrierungseinsatzstroms in einer Aufheizvorrichtung und Verdampfen des Hydrierungseinsatzstroms in einer Verdampfungsvorrichtung,
(d) Zuführen des aufgeheizten und verdampften Hydrierungseinsatzstroms zu einem mindestens eine Hydrierungszone umfassenden Hydrierungsreaktor, mindestens teilweises Umsetzen der im Hydrierungseinsatzstrom enthaltenen Olefine in dem Hydrierungsreaktor unter Olefin-Hydrierungsbedingungen, Ausleiten eines dampfförmigen Olefin-Hydrierungsproduktstroms aus dem Hydrierungsreaktor,
(e) Auftrennen des Olefin-Hydrierungsproduktstroms in einer Auftrennvorrichtung in einen dampfförmigen Reformierungsfeedstrom, der einer Dampfreformierungsanlage zugeführt wird, und in einen dampfförmigen Rückführstrom,
(f) Abkühlen des dampfförmigen Rückführstroms, wobei dieser mindestens teilweise kondensiert und nachfolgend einer Phasentrennvorrichtung zugeführt wird, in der er in einen dampfförmigen Teilrückführstrom und einen flüssigen Teilrückführstrom aufgetrennt wird,
(g) Ausleiten des dampfförmigen Teilrückführstroms und des flüssigen Teilrückführstroms aus der Phasentrennvorrichtung, wobei der dampfförmige Teilrückführstrom mit dem zweiten Einsatzstrom zusammengeführt wird und der flüssige Teilrückführstrom mit dem ersten Einsatzstrom zusammengeführt wird und/oder zum Verfahrensschritt (b) zurückgeführt wird.

2. Verfahren nach Anspruch 1, **dadurch gekennzeichnet, dass** der dampfförmige Teilrückführstrom mit dem zweiten Einsatzstrom zusammengeführt und mit diesem gemeinsam verdichtet wird oder dass der dampfförmige Teilrückführstrom mit dem bereits verdichteten, zweiten Einsatzstrom zusammengeführt wird.

3. Verfahren nach Anspruch 1 oder 2, **dadurch gekennzeichnet, dass** die Aufheizvorrichtung in Verfahrensschritt (c) als Wärmetauscher ausgestaltet ist, in dem der Hydrierungseinsatzstroms durch indirekten Wärmetausch mit einem heißen Rohsynthesegas-Produktstrom aus der Dampfreformierungsanlage, mit einem heißen Rauchgasstrom aus dem Reformerofen, mit einem heißen Produktgasstrom aus der der Dampfreformierungsanlage nachgeschalteten CO-Konvertierungsanlage (CO-Shift) oder mit mehreren dieser Heißgasströme aufgeheizt wird.

4. Verfahren nach einem der vorigen Ansprüche, **dadurch gekennzeichnet, dass** im Hydrierungsreaktor auch ein mindestens teilweises Umsetzen von im ersten Einsatzstrom enthaltenen, organischen Schwefelverbindungen unter Bedingungen der Hydrodesulfurierung (HDS) zu entschwefelten Kohlenwasserstoffen und Schwefelwasserstoff erfolgt, wobei der gebildete Schwefelwasserstoff aus dem Reformierungsfeedstrom abgetrennt wird, bevor er der Dampfreformierungsanlage zugeführt wird.

5. Verfahren nach einem der vorigen Ansprüche, **dadurch gekennzeichnet, dass** das Abkühlen in Verfahrensschritt (f) mehrstufig erfolgt, wobei mindestens eine Kühlstufe als Wärmetauscher ausgestaltet ist, in dem das Abkühlen des dampfförmigen Rückführstroms im indirekten Wärmetausch gegen den dem Verfahren zugeführten ersten Einsatzstrom oder den Hydrierungseinsatzstrom erfolgt.

6. Verfahren nach Anspruch 5, **dadurch gekennzeichnet, dass** mindestens eine weitere Kühlstufe vorhanden ist, in der das Abkühlen des dampfförmigen Rückführstroms im indirekten Wärmetausch gegen ein Kühlmedium, insbesondere Kühlwasser, erfolgt.

7. Verfahren nach einem der vorigen Ansprüche, **dadurch gekennzeichnet, dass** der dampfförmige Rückführstrom so stark abgekühlt wird, dass er zu mindestens zur Hälfte kondensiert wird, so dass mindestens 50 mol-%, bevorzugt mindestens 70 mol-% des Rückführstroms des Rückführstroms flüssig vorliegen.

8. Verfahren nach einem der vorigen Ansprüche, **dadurch gekennzeichnet, dass** die Dampfreformierungsanlage eine Vorreformierungsstufe (Prereformer) umfasst, in der höhere Kohlenwasserstoffe unter Vorreformierungsbedingungen mindestens teilweise zu Methan umgesetzt werden.

9. Vorrichtung zum Herstellen eines Feedstroms für eine mindestens eine Reformierungsstufe enthaltende Dampfreformierungsanlage, umfassend folgende, in Fluidverbindung miteinander stehende Bestandteile:
(a) Mittel zum Bereitstellen eines ersten flüssigen Einsatzstroms, der Olefine enthält, und eines zweiten, Wasserstoff umfassenden Einsatzstroms,
(b) Mittel zum Zusammenführen des ersten und des zweiten Einsatzstroms zu einem Hydrierungseinsatzstrom,
(c) eine Aufheizvorrichtung zum Aufheizen des Hydrierungseinsatzstroms eine Verdampfungsvorrichtung zum Verdampfen des Hydrierungseinsatzstroms,
(d) einen mindestens eine Hydrierungszone umfassenden Hydrierungsreaktor, Mittel zum Zuführen des aufgeheizten und verdampften Hydrierungseinsatzstroms zum Hydrierungsreaktor, Mittel zum Ausleiten eines dampfförmigen Olefin-Hydrierungsproduktstroms aus dem Hydrierungsreaktor,
(e) eine Auftrennvorrichtung zum Auftrennen des Olefin-Hydrierungsproduktstroms in einen dampfförmigen Reformierungsfeedstrom und einen dampfförmigen Rückführstrom, Mittel zum Zuführen des dampfförmigen Reformierungsfeedstroms zu einer Dampfreformierungsanlage,
(f) Mittel zum Abkühlen und zur mindestens teilweise Kondensieren des dampfförmigen Rückführstroms, Mittel zum Zuführen des mindestens teilweise kondensierten, dampfförmigen Rückführstroms zu einer Phasentrennvorrichtung, eine Phasentrennvorrichtung, geeignet zum Auftrennen des mindestens teilweise kondensierten, dampfförmigen Rückführstroms in einen dampfförmigen Teilrückführstrom und einen flüssigen Teilrückführstrom,
(g) Mittel zum Ausleiten des dampfförmigen Teilrückführstroms und des flüssigen Teilrückführstroms aus der Phasentrennvorrichtung, Mittel zum Zusammenführen des dampfförmigen Teilrückführstroms mit dem zweiten Einsatzstrom, Mittel zum Zusammenführen des flüssigen Teilrückführstroms mit dem ersten Einsatzstrom und/oder Mittel zum Zurückführen des flüssigen Teilrückführstroms zum Vorrichtungsbestandteil (b).

10. Vorrichtung nach Anspruch 9, ferner umfassend einen Verdichter, geeignet zum Verdichten des zweiten Einsatzstroms oder des mit dem dampfförmigen Teilrückführstrom zusammengeführten zweiten Einsatzstroms.

11. Vorrichtung nach Anspruch 9 oder 10, **dadurch gekennzeichnet, dass** die Aufheizvorrichtung in Vorrichtungsbestandteil (c) als Wärmetauscher ausgestaltet ist, geeignet zum Aufheizen des Hydrierungseinsatzstroms durch indirekten Wärmetausch mit einem heißen Rohsynthesegas-Produktstrom aus der Dampfreformierungsanlage, mit einem heißen Rauchgasstrom aus dem Reformerofen, mit einem heißen Produktgasstrom aus der der Dampfreformierungsanlage nachgeschalteten CO-Konvertierungsanlage (CO-Shift) oder mit mehreren dieser Heißgasströme.

12. Vorrichtung nach einem der vorigen Ansprüche, **dadurch gekennzeichnet, dass** der Hydrierungsreaktor auch geeignet ist zum mindestens teilweisen Umsetzen von im ersten Einsatzstrom enthaltenen, organischen Schwefelverbindungen unter Bedingungen der Hydrodesulfurierung (HDS) zu entschwefeften Kohlenwasserstoffen und Schwefelwasserstoff, wobei ferner Mittel umfasst werden, um den gebildeten Schwefelwasserstoff aus dem Reformierungsfeedstrom abzutrennen, bevor er der Dampfreformierungsanlage zugeführt wird.

13. Vorrichtung nach einem der vorigen Ansprüche, **dadurch gekennzeichnet, dass** die Abkühlvorrichtung in Vorrichtungsbestandteil (f) mehrstufig ausgestaltet ist, wobei mindestens eine Kühlstufe als Wärmetauscher ausgestaltet ist, geeignet zum Abkühlen des dampfförmigen Rückführstroms im indirekten Wärmetausch gegen den dem Verfahren zugeführten ersten Einsatzstrom oder den Hydrierungseinsatzstrom.

14. Vorrichtung nach Anspruch 13, **dadurch gekennzeichnet, dass** mindestens eine weitere Kühlstufe vorhanden ist, geeignet zum Abkühlen des dampfförmigen Rückführstroms im indirekten Wärmetausch gegen ein Kühlmedium, insbesondere Kühlwasser.

15. Vorrichtung nach einem der vorigen Ansprüche, **dadurch gekennzeichnet, dass** die Dampfreformierungsanlage eine Vorreformierungsstufe (Prereformer) umfasst, geeignet zum mindestens teilweise Umsetzen der höhere Kohlenwasserstoffe unter Vorreformierungsbedingungen zu Methan.

## Claims

1. Process for producing a feed stream for a steam reforming plant containing at least one reforming stage, comprising the following steps:
(a) provision of a first liquid input stream containing olefins and a second input stream comprising hydrogen,
(b) combining of the first input stream and the second input stream to form a hydrogenation input stream,
(c) heating of the hydrogenation input stream in a heating apparatus and vaporization of the hydrogenation input stream in a vaporization apparatus,
(d) introduction of the heated and vaporized hydrogenation input stream into a hydrogenation reactor comprising at least one hydrogenation zone, at least partial conversion of the olefins present in the hydrogenation input stream in the hydrogenation reactor under olefin hydrogenation conditions, discharge of a gaseous olefin hydrogenation product stream from the hydrogenation reactor,
(e) separation of the olefin hydrogenation product stream in a separation apparatus into a gaseous reforming feed stream which is fed into a steam reforming plant and a gaseous recycle stream,
(f) cooling of the gaseous recycle stream, with this being at least partially condensed and subsequently introduced into a phase separation apparatus in which it is separated into a gaseous partial recycle stream and a liquid partial recycle stream,
(g) discharge of the gaseous partial recycle stream and the liquid partial recycle stream from the phase separation apparatus, with the gaseous partial recycle stream being combined with the second input stream and the liquid partial recycle stream being combined with the first input stream and/or being recirculated to process step (b).

2. Process according to Claim 1, **characterized in that** the gaseous partial recycle stream is combined with the second input stream and compressed together with the latter or **in that** the gaseous partial recycle stream is combined with the previously compressed, second input stream.

3. Process according to Claim 1 or 2, **characterized in that** the heating apparatus in process step (c) is configured as a heat exchanger in which the hydrogenation input stream is heated by indirect heat exchange with a hot crude synthesis gas product stream from the steam reforming plant, with a hot flue gas stream from the reformer furnace, with a hot product gas stream from the CO conversion plant located downstream of the steam reforming plant (CO shift) or with a plurality of these hot gas streams.

4. Process according to any of the preceding claims, **characterized in that** an at least partial conversion of organic sulfur compounds present in the first input stream also occurs in the hydrogenation reactor under conditions of hydrodesulfurization (HDS) to give desulfurized hydrocarbons and hydrogen sulfide, with the hydrogen sulfide formed being separated off from the reforming feed stream before the latter is fed to the steam reforming plant.

5. Process according to any of the preceding claims, **characterized in that** the cooling in process step (f) is effected in a number of stages, with at least one cooling stage being configured as a heat exchanger in which cooling of the gaseous recycle stream occurs by indirect heat exchange with the first input stream introduced into the process or the hydrogenation input stream.

6. Process according to Claim 5, **characterized in that** at least one further cooling stage in which cooling of the gaseous recycle stream occurs by indirect heat exchange with a cooling medium, in particular cooling water, is present.

7. Process according to any of the preceding claims, **characterized in that** the gaseous recycle stream is cooled to such an extent that at least half of it is condensed, so that at least 50 mol%, preferably at least 70 mol% of the recycle stream is present in liquid form.

8. Process according to any of the preceding claims, **characterized in that** the steam reforming plant comprises a prereforming stage (prereformer) in which higher hydrocarbons are at least partly converted into methane under prereforming conditions.

9. Apparatus for producing a feed stream for a steam reforming plant containing at least one reforming stage, comprising the following constituents which are in fluid communication with one another:
(a) means for providing a first liquid input stream containing olefins and a second input stream comprising hydrogen,
(b) means for combining the first input stream and the second input stream to form a hydrogenation input stream,
(c) a heating apparatus for heating the hydrogenation input stream, and a vaporization apparatus for vaporizing the hydrogenation input stream,
(d) a hydrogenation reactor comprising at least one hydrogenation zone, and means for introducing the heated and vaporized hydrogenation input stream into the hydrogenation reactor, and means for discharging a gaseous olefin hydrogenation product stream from the hydrogenation reactor,
(e) a separation apparatus for separating the olefin hydrogenation product stream into a gaseous reforming feed stream and a gaseous recycle stream, and means for introducing the gaseous reforming feed stream into a steam reforming plant,
(f) means for cooling and at least partially condensing the gaseous recycle stream, means for introducing the at least partially condensed, gaseous recycle stream into a phase separation apparatus, a phase separation apparatus suitable for separating the at least partially condensed, gaseous recycle stream into a gaseous partial recycle stream and a liquid partial recycle stream,
(g) means for discharging the gaseous partial recycle stream and the liquid partial recycle stream from the phase separation apparatus, means for combining the gaseous partial recycle stream with the second input stream, means for combining the liquid partial recycle stream with the first input stream and/or means for recirculating the liquid partial recycle stream to the apparatus constituent (b).

10. Apparatus according to Claim 9, further comprising a compressor suitable for compressing the second input stream or the second input stream combined with the gaseous partial recycle stream.

11. Apparatus according to Claim 9 or 10, **characterized in that** the heating apparatus in apparatus constituent (c) is configured as a heat exchanger suitable for heating the hydrogenation input stream by indirect heat exchange with a hot crude synthesis gas product stream from the steam reforming plant, with a hot flue gas stream from the reformer furnace, with a hot product gas stream from the CO conversion plant located downstream of the steam reforming plant (CO shift) or with a plurality of these hot gas streams.

12. Apparatus according to any of the preceding claims, **characterized in that** the hydrogenation reactor is also suitable for at least partial conversion of organic sulfur compounds present in the first input stream under conditions of hydrodesulfurization (HDS) into desulfurized hydrocarbons and hydrogen sulfide, with means for separating the resulting hydrogen sulfide from the reforming feed stream before the latter is fed to the steam reforming plant also being present.

13. Apparatus according to any of the preceding claims, **characterized in that** the cooling apparatus in apparatus constituent (f) is configured with a number of stages, with at least one cooling stage being configured as a heat exchanger suitable for cooling the gaseous recycle stream by indirect heat exchange with the first input stream introduced into the process or the hydrogenation input stream.

14. Apparatus according to Claim 13, **characterized in that** at least one further cooling stage suitable for cooling the gaseous recycle stream by indirect heat exchange with a cooling medium, in particular cooling water, is present.

15. Apparatus according to any of the preceding claims, **characterized in that** the steam reforming plant comprises a prereforming stage (prereformer) suitable for at least partial conversion of the higher hydrocarbons into methane under prereforming conditions.

## Revendications

1. Procédé de production d'un courant de charge pour une installation de reformage à la vapeur contenant au moins un étage de reformage, comprenant les étapes suivantes :
(a) obtention d'un premier courant d'entrée liquide contenant des oléfines et d'un deuxième courant d'entrée comprenant de l'hydrogène,
(b) combinaison du premier courant d'entrée et du deuxième courant d'entrée pour former un courant d'entrée d'hydrogénation,
(c) chauffage du courant d'entrée d'hydrogénation dans un appareil de chauffage et vaporisation du courant d'entrée d'hydrogénation dans un appareil de vaporisation,
(d) introduction du courant d'entrée d'hydrogénation chauffé et vaporisé dans un réacteur d'hydrogénation comprenant au moins une zone d'hydrogénation, conversion au moins partielle des oléfines présentes dans le courant d'entrée d'hydrogénation dans le réacteur d'hydrogénation dans des conditions d'hydrogénation d'oléfines, évacuation d'un courant de produit d'hydrogénation d'oléfines gazeux du réacteur d'hydrogénation,
(e) séparation du courant de produit d'hydrogénation d'oléfines dans un appareil de séparation en un courant de charge de reformage gazeux qui est introduit dans une installation de reformage à la vapeur et un courant de recyclage gazeux,
(f) refroidissement du courant de recyclage gazeux, celui-ci étant au moins partiellement condensé puis introduit dans un appareil de séparation de phases dans lequel il est séparé en un courant de recyclage partiel gazeux et un courant de recyclage partiel liquide,
(g) évacuation du courant de recyclage partiel gazeux et du courant de recyclage partiel liquide de l'appareil de séparation de phases, le courant de recyclage partiel gazeux étant combiné avec le deuxième courant d'entrée et le courant de recyclage partiel liquide étant combiné avec le premier courant d'entrée et/ou remis en circulation à l'étape (b) du procédé.

2. Procédé selon la revendication 1, **caractérisé en ce que** le courant de recyclage partiel gazeux est combiné avec le deuxième courant d'entrée et compressé avec ce dernier ou **en ce que** le courant de recyclage partiel gazeux est combiné avec le deuxième courant d'entrée préalablement compressé.

3. Procédé selon la revendication 1 ou 2, **caractérisé en ce que** l'appareil de chauffage à l'étape (c) du procédé est configuré comme un échangeur de chaleur dans lequel le courant d'entrée d'hydrogénation est chauffé par échange de chaleur indirect avec un courant de produit de gaz de synthèse brut chaud provenant de l'installation de reformage à la vapeur, avec un courant de gaz de combustion chaud provenant du four du reformeur, avec un courant de gaz de produit chaud provenant de l'installation de conversion de CO située en aval de l'installation de reformage à la vapeur (réaction du gaz à l'eau) ou avec une pluralité de ces courants de gaz chaud.

4. Procédé selon l'une quelconque des revendications précédentes, **caractérisé en ce qu'**une conversion au moins partielle de composés soufrés organiques présents dans le premier courant d'entrée se produit également dans le réacteur d'hydrogénation dans des conditions d'hydrodésulfuration (HDS) pour donner des hydrocarbures désulfurés et du sulfure d'hydrogène, le sulfure d'hydrogène formé étant séparé du courant de charge de reformage avant que ce dernier soit introduit dans l'installation de reformage à la vapeur.

5. Procédé selon l'une quelconque des revendications précédentes, **caractérisé en ce que** le refroidissement à l'étape (f) du procédé est effectué dans un nombre d'étages, au moins un étage de refroidissement étant configuré comme un échangeur de chaleur dans lequel un refroidissement du courant de recyclage gazeux se produit par échange de chaleur indirect avec le premier courant d'entrée introduit dans le procédé ou le courant d'entrée d'hydrogénation.

6. Procédé selon la revendication 5, **caractérisé en ce qu'**au moins un autre étage de refroidissement dans lequel un refroidissement du courant de recyclage gazeux se produit par échange de chaleur indirect avec un milieu de refroidissement, en particulier de l'eau de refroidissement, est présent.

7. Procédé selon l'une quelconque des revendications précédentes, **caractérisé en ce que** le courant de recyclage gazeux est refroidi à un degré tel qu'au moins la moitié de celui-ci est condensée, de telle sorte qu'au moins 50 % en moles, de préférence au moins 70 % en moles du courant de recyclage est présent sous forme liquide.

8. Procédé selon l'une quelconque des revendications précédentes, **caractérisé en ce que** l'installation de reformage à la vapeur comprend un étage préreformage (préreformeur) dans lequel des hydrocarbures supérieurs sont au moins partiellement convertis en méthane dans des conditions de préreformage.

9. Appareil de production d'un courant de charge pour une installation de reformage à la vapeur contenant au moins un étage de reformage, comprenant les constituants suivants qui sont en communication fluidique les uns avec les autres :
a) un moyen d'obtention d'un premier courant d'entrée liquide contenant des oléfines et d'un deuxième courant d'entrée comprenant de l'hydrogène,
b) un moyen de combinaison du premier courant d'entrée et du deuxième courant d'entrée pour former un courant d'entrée d'hydrogénation,
c) un appareil de chauffage pour le chauffage du courant d'entrée d'hydrogénation, et un appareil de vaporisation pour la vaporisation du courant d'entrée d'hydrogénation,
d) un réacteur d'hydrogénation comprenant au moins une zone d'hydrogénation, et un moyen d'introduction du courant d'entrée d'hydrogénation chauffé et vaporisé dans le réacteur d'hydrogénation, et un moyen d'évacuation d'un courant de produit d'hydrogénation d'oléfines gazeux du réacteur d'hydrogénation,
e) un appareil de séparation pour séparer le courant de produit d'hydrogénation d'oléfines en un courant de charge de reformage gazeux et un courant de recyclage gazeux, et un moyen d'introduction du courant de charge de reformage gazeux dans une installation de reformage à la vapeur,
f) un moyen de refroidissement et de condensation au moins partielle du courant de recyclage gazeux, un moyen d'introduction du courant de recyclage gazeux au moins partiellement condensé dans un appareil de séparation de phases, un appareil de séparation de phases convenant pour la séparation dudit courant de recyclage gazeux au moins partiellement condensé en un courant de recyclage partiel gazeux et un courant de recyclage partiel liquide,
g) un moyen d'évacuation du courant de recyclage partiel gazeux et du courant de recyclage partiel liquide de l'appareil de séparation de phases, un moyen de combinaison du courant de recyclage partiel gazeux avec le deuxième courant d'entrée, un moyen de combinaison du courant de recyclage partiel liquide avec le premier courant d'entrée, et/ou un moyen de recirculation du courant de recyclage partiel liquide vers le constituant (b) de l'appareil.

10. Appareil selon la revendication 9, comprenant en outre un compresseur convenant pour la compression du deuxième courant d'entrée ou du deuxième courant d'entrée combiné avec le courant de recyclage partiel gazeux.

11. Appareil selon la revendication 9 ou 10, **caractérisé en ce que** l'appareil de chauffage dans le constituant (c) de l'appareil est configuré comme un échangeur de chaleur convenant pour le chauffage du courant d'entrée d'hydrogénation par échange de chaleur indirect avec un courant de produit de gaz de synthèse brut chaud provenant de l'installation de reformage à la vapeur, avec un courant de gaz de combustion chaud provenant du four du reformeur, avec un courant de gaz de produit chaud provenant de l'installation de conversion de CO située en aval de l'installation de reformage à la vapeur (réaction du gaz à l'eau) ou avec une pluralité de ces courants de gaz chaud.

12. Appareil selon l'une quelconque des revendications précédentes, **caractérisé en ce que** le réacteur d'hydrogénation convient également pour une conversion au moins partielle de composés soufrés organiques présents dans le premier courant d'entrée dans des conditions d'hydrodésulfuration (HDS) en hydrocarbures désulfurés et en sulfure d'hydrogène, avec un moyen de séparation du sulfure d'hydrogène obtenu du courant de charge de reformage avant que ce dernier soit introduit dans l'installation de reformage à la vapeur qui est également présente.

13. Appareil selon l'une quelconque des revendications précédentes, **caractérisé en ce que** l'appareil de refroidissement dans le constituant (f) de l'appareil est configuré avec un nombre d'étages, au moins un étage de refroidissement étant configuré comme un échangeur de chaleur convenant pour le refroidissement du courant de recyclage gazeux par échange de chaleur indirect avec le premier courant d'entrée introduit dans le procédé ou le courant d'entrée d'hydrogénation.

14. Appareil selon la revendication 13, **caractérisé en ce qu'**au moins un autre étage de refroidissement convenant pour le refroidissement du courant de recyclage gazeux par échange de chaleur indirect avec un milieu de refroidissement, en particulier de l'eau de refroidissement, est présent.

15. Appareil selon l'une quelconque des revendications précédentes, **caractérisé en ce que** l'installation de reformage à la vapeur comprend un étage de préreformage (préreformeur) convenant pour une conversion au moins partielle des hydrocarbures supérieurs en méthane dans des conditions de préreformage.
